# EUROPÄISCHE PATENTANMELDUNG

(11) **EP 0 613 929 A1**
(43) Veröffentlichungstag der Anmeldung: **07.09.1994**
(21) Anmeldenummer: 94102475.4
(22) Anmeldetag: 18.02.1994
(51) Int. Cl.: C09B 67/24, C09B 67/22, D06P 1/38

(54) **Reaktivfarbstoffgrünmischung mit verringertem Dichroismus**

(30) Priorität: 03.03.1993 DE 4306613
(71) Anmelder: BAYER AG, 51368 Leverkusen (DE)
(72) Erfinder: Hildebrand, Dietrich, Dr., D-51519 Odenthal (DE); Wolff, Joachim, Dr., D-51519 Odenthal (DE); Schulz, Rolf, Dipl.-Ing., D-50667 Köln (DE)

(57) **Zusammenfassung**

Eine Reaktivfarbstoffmischung enthält wenigstens einen Vinylsulfonyl-Ni-phthalocyaninfarbstoff, wenigstens einen Fluor-chlorpyrimidinyl-Ni-phthalocyaninfarbstoff und/oder einen Chlortriazinyl-Ni-phthalocyaninfarbstoff.

## Beschreibung

Die Erfindung betrifft Mischungen von Ni-Phthalocyaninreaktivfarbstoffen, die beim Färben von Cellulose oder Celluloseregeneratfasern einen gegenüber den Einzelkomponenten verringerten Dichroismus besitzen.

Unter Dichroismus versteht man die Eigenschaft von Farbstoffen, daß damit erstellte Färbungen beim Erschöpfen des Färbebades auf den im Faserkollektiv nebeneinanderliegenden Einzelfasern einen mehr oder weniger deutlichen Farbunterschied aufweisen. Bei Ni-Phthalocyaninreaktivfarbstoffen äußert sich dies beim Wechsel von Lichtquelle und Beleuchtungswinkel in einem unruhigen Warenbild und einer Tonverschiebung. Obwohl eine quantitative Kennzeichnung dieser unerwünschten Eigenschaft bis jetzt noch nicht festgelegt ist, werden die Färbungen in der Praxis nach ihrem Dichroismus beurteilt. Beim Vergleich von Grünnuancen werden solche Färbungen am höchsten bewertet, welche am wenigsten Dichroismus zeigen.

Bei Reaktivfarbstoffen auf Cellulose und/oder Celluloseregeneratfasern führt diese Eigenschaft zu besonderen Problemen, weil Reaktivfarbstoffe auf Cellulosefasern insbesondere wegen ihrer Brillanz in anspruchsvollen hochmodischen Dessins eingesetzt werden. Ein Tonumschlag von der blauen nach der gelben Seite einer brillanten Grünfärbung bzw. einer Grünkombinationsfärbung, die beim Wechsel der Belichtungsverhältnisse ein dichroitisches Warenbild zeigt, stellt somit eine starke Wertminderung der betreffenden Färbung dar. Bevorzugt sind daher Farbstoffe, welche nichtdichroitische Färbungen von hoher Faseregalität ergeben und bei Lichtwechsel und unter verschiedenen Betrachtungsstandpunkten nur eine geringe Farbtonverschiebung, d.h. eine hohe Farbkonstanz aufweisen.

Reaktivfarbstoffe werden in Form ihrer Einzelkomponenten oder in Form von Kombinationen verschiedener Farbstoffe eines Sortimentes zum Färben von Cellulosefasern verwendet.

Mischungen von Reaktivfarbstoffen zum Färben von insbesondere Cellulosefasern und Fasermischungen sind bereits bekannt. US-A-4 338 093 bezieht sich auf Mischungen von Reaktivfarbstoffen, die den selben Farbton ergeben, aber eine unterschiedliche Reaktivität aufweisen. DE-A-3 718 397 beschreibt Mischungen von Formazanresktivfarbstoffen. US-A-5 047 067 beschreibt Mischungen von Reaktivfarbstoffen mit unterschiedlicher Reaktivgruppe, unterschiedlicher Substantivität, aber etwa dem gleichen Farbton.

Gemäß EP-A-113 251 sollen Mischfasern mit einer Farbstoffmischung gefärbt werden, die einen Farbstoff mit zwei Reaktivgruppen und einen Farbstoff mit einer Reaktivgruppe aufweist.

EP-A-458 152, JP-A-01 144 467, JP-A-0 143 567 und JP-A-0 143 568 beschreiben Reaktivfarbstoffmischungen mit Phthalocyaninen.

Bei der Kombination sollen die Fixiergeschwindigkeiten der Einzelkomponenten der Kombination möglichst gleich oder zumindest ähnlich sein, um die Kombinierbarkeit der Farbstoffe während des Färbevorgangs zu gewährleisten und somit ein "ruhiges", egales Warenbild zu erreichen. Besitzen Reaktivfarbstoffe unterschiedliche Reaktivitäten und Substantivitäten und damit unterschiedliche Fixiergeschwindigkeiten, so werden sie als voneinander verschiedenen Farbstoffsortimenten zugehörig angesehen, die nach unterschiedlichen Alkali- und Temperaturbedingungen angewandt werden müssen. Eine unterschiedliche Reaktivität und Substantivität bedingt somit bei Farbstoffmischungen ein unterschiedliches Aufziehverhalten, d.h. nicht tonkonstantes Aufziehen im zeitlichen Ablauf der Fixierung. Die Reaktivität eines Reaktivfarbstoffs wird in erster Näherung durch den chemischen Aufbau seiner Reaktivgruppe festgelegt.

Aufgrund des von den üblichen Reaktivfarbstoffen stark abweichenden Aufzieh-, Diffundier- und Fixierverhaltens der Ni-Phthalocyaninreaktivfarbstoffe besteht ein Vorurteil, Ni-Phthalocyaninreaktivfarbstoffe mit unterschiedlicher Reaktivgruppe in Form von Mischungen zum gleichzeitigen Färben nach der gleichen Färbevorschrift, d.h. unter gleichen Alkali-, Salz- und Temperaturbedingungen einzusetzen.

Reaktivfarbstoffe zum Färben von Cellulosefasern dienen insbesondere zum Färben von farbstarken Modetönen. Hierbei ist von besonderem Schwierigkeitsgrad die Erstellung von Färbungen hoher Egalität im Brillantgrünbereich insbesondere unter Verwendung von Ni-Phthalocyanin. Die Erstellung egaler Färbungen auf Basis eines einheitlichen Reaktivfarbstoffmoleküls ist mittels der heute im Markt befindlichen Farbstoffe noch nicht befriedigend möglich, da Cellulosefasern gegenüber dem Ni-Phthalocyaninchromophor bei der Erstellung von Brillantgrünfärbungen zu einer ungleichmäßigen, d.h. dichroitischen Farbstoffaufnahme neigen, wenn wie üblich nur Farbstoffe einer Molekülstruktur verwendet werden.

Ni-Phthalocyaninreaktivfarbstoffe besitzen neben dem Problem der Faserunegalität, welches als Dichroismus bezeichnet wird, wenn man sie als Typ einsetzt, bekanntlicherweise das Problem der Flächenegalität. Das heißt, mit Reaktivfarbstoffen, die jeweils einem Reaktivtyp entsprechen, die z.B. entweder als Vinylsulfonyl oder als Fluor-chlorpyrimidine bezeichnet werden, treten in der Praxis unegale Färbungen im statistischen Mittel deutlich häufiger auf als bei anderen Farbstoffklassen.

Der Erfindung liegt die Aufgabe zugrunde, Reaktivfarbstoffmischungen zur verbesserten Erstellung tongleich aufziehender Brillantgrünfärbungen mit verbessertem Dichroismus und verbesserter Löslichkeit bereitzustellen, die einen gleichmäßigen Fixierverlauf zeigen.

Die Farbstoffmischung sollte ein im zeitlichen Verlauf nuancenkonstantes flächenegales und reproduzierbares Färbeverhalten zeigen.

Die vorliegende Erfindung betrifft eine Ni-Phthalocyaninreaktivfarbstoffmischung aus wenigstens zwei Reaktivfarbstoffen mit unterschiedlicher Reaktivgruppe, dadurch gekennzeichnet, daß wenigstens ein Vinylsulfonyl-Ni-phthalocyaninfarbstoff 1 der Formel 1.1 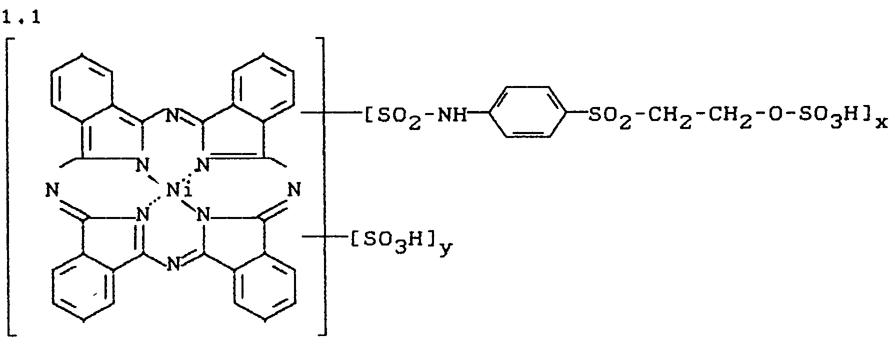
wobei
- x =: 1 bis 3, insbesondere 1 bis 2, speziell 1,3 bis 1,8
- y =: 1 bis 3, insbesondere 1,5 bis 2
- x + y =: etwa 3 bis 4

wenigstens ein Fluor-chlor-pyrimidyl-Ni-phthalocyaninfarbstoff 2 der Formeln 2.1 oder 2.2 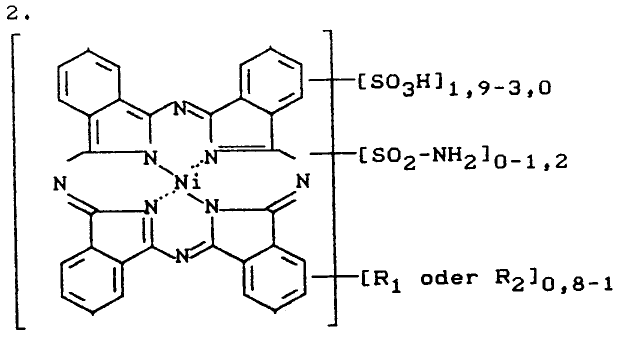
worin bedeuten 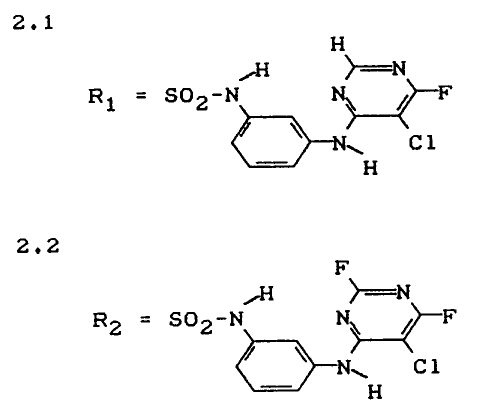
und/oder wenigstens ein Chlor-triazinyl-Ni-phthalocyaninreaktivfarbstoff 3 der Formeln 3.1 und 3.2 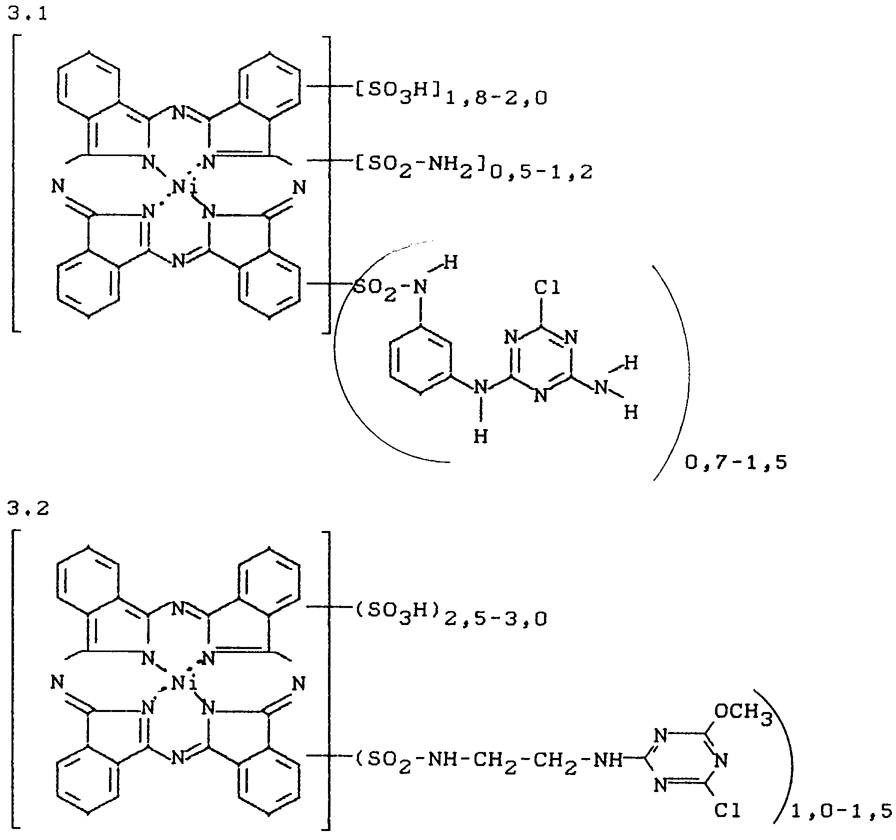
enthalten ist.

Zusätzlich kann gegebenenfalls wenigstens ein Farbstoff 4 folgender Formeln 4.1 bis 4.3 enthalten sein: 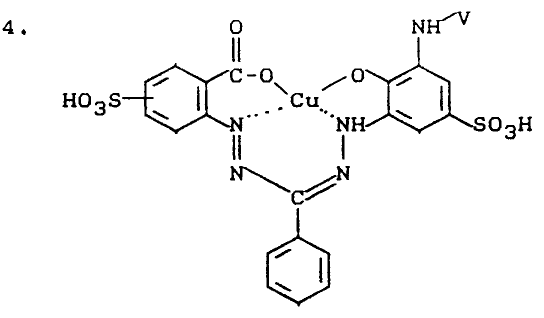
mit den Bedeutungen 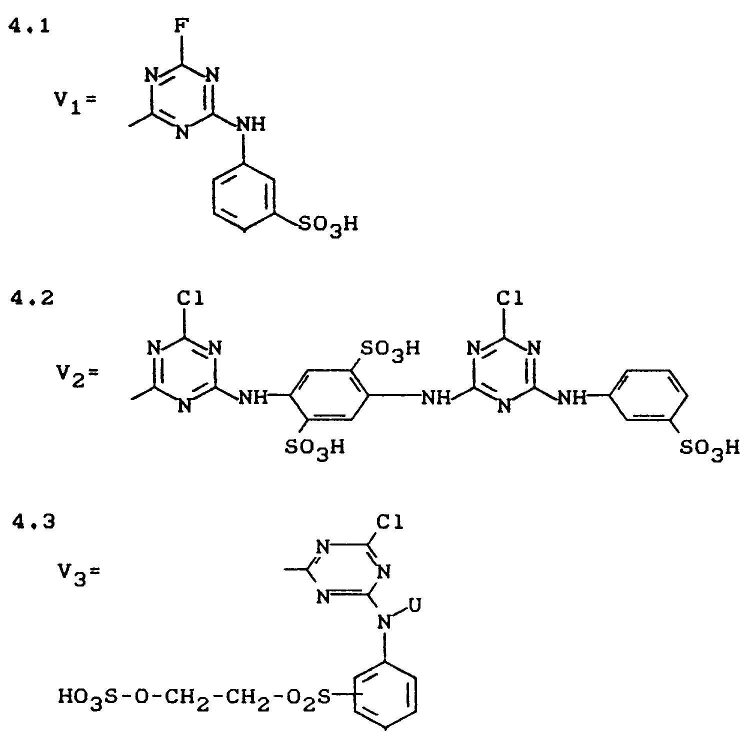
worin U = H, CH₃ oder -C₂H₅ bedeutet.

Die erfindungsgemäßen Mischungen ergeben beim Färben auf Cellulosefasern brillante neutrale Grün- bzw. Blaunuancen mit verringertem Dichroismus, die ein zeitlich farbtonkonstantes egales Aufziehverhalten aufweisen. Die erfindungsgemäßen Mischungen eignen sich darüber hinaus nicht nur zur Erstellung von egalen nichtdichroitischen Grüntönen, sondern auch in Kombination mit gelben und roten Reaktivfarbstoffen zur Erstellung von überraschend egalen, nicht dichroitischen Braun- und Beigetönen sowie in Kombination mit Marine-und Schwarzmarken zur Erstellung tiefer Blaunuancen, welche bei Verwendung anstelle der erfindungsgemäßen Mischung nur durch Verwendung eines der beiden einheitlichen Ni-Phthalocyaninfarbstoffe infolge des sich ergebenden Warenbildes nicht sicher gefärbt werden können und daher üblicherweise keine Anwendung finden.

Die erfindungsgemäß zu verwendenden Farbstoffmischungen zeigen beim Aufziehen und Fixieren auf Cellulosefasern, besonders bei Anwendung in kurzen Flottenverhältnissen, ein besseres, d.h. nicht dichroitisches Warenbild als die üblicherweise allein verwendeten Ni-Phthalocyaninreaktivfarbstoffe. Ein weiterer Vorteil der erfindungsgemäßen Mischungen ist die Verbesserung der Farbstofflöslichkeit in Gegenwart von Elektrolyt. Dies gilt bevorzugt in Gegenwart des für den Ausziehprozeß aus langer Flotte verwendeten Elektrolyts wie Natriumchlorid und Natriumsulfat. Der Mischfarbstoff zeigt in Gegenwart von Salz nicht nur eine bessere Löslichkeit in Wasser, sondern auch eine bessere Flottenstabilität gegenüber dem Absorptionsverhalten der Baumwolle, indem ein gleichmäßiger Ausziehprozeß stattfindet und der Farbstoff nicht vorschnell auf der Cellulosefaser selektiv ausgefällt oder absorbiert wird.

Überraschend ist weiter, daS bei der Anwendung in einer Mischung aus einem Vinylsulfonyl-Ni-phthalocyaninreaktivfarbstoff und einem Fluorchlorpyrimidyl-Ni-phthalocyanin ein flächenegales Ausziehen erfolgt, so daß klare egale Grünfärbungen mit verringertem Dichroismus und verbesserter Flächenegalität erhalten werden können, ohne daß das Färbegut während des Färbevorgangs eine sich verändernde Nuance durchläuft. Dadurch ist eine vorteilhafte Anwendbarkeit bei sich schwerer verlegenden Warenqualitäten und Faltenbildung in der Färbemaschine gegeben. Die erfindungsgemäßen Farbstoffmischungen zeigen schließlich während des Fixierens eine tonkonstante Baderschöpfung und einen langsamen Aufbau der Nuance der Färbung.

Zur besseren Handhabung enthalten die erfindungsgemäßen Mischungen Dispergiermittel, insbesondere 0,5 bis 10 Gew.-Teile eines organischen anionischen Dispergiermittels sowie Hexapolyphosphate bezogen auf die gesamte Mischung und ein Entstaubungsmittel, vorzugsweise 0,5 bis 5 Gew.-Teile, bezogen auf die gesamte Mischung. Die erfindungsgemäße Mischung kann in Form von Pulver oder Granulat oder auch in Form einer Flüssigmischung verwendet werden. Soweit nichts anderes angegeben, sind die im folgenden angegebenen Teile Gewichtsteile.

Besonders bevorzugte Mischungen werden im folgenden angegeben:
Mischung 1 : Farbstoffe 1.1, 2.1
Mischung 3 : Farbstoffe 1.1, 2.2
Mischung 4 : Farbstoffe 1.2, 2.2
Mischung 5 : Farbstoffe 1.1, 3.1
Mischung 6 : Farbstoffe 1.2, 3.1
Mischung 7 : Farbstoffe 1.1, 3.2
Mischung 8 : Farbstoffe 1.2, 3.2
Mischung 9 : Farbstoffe 1.1, 2.1 und 2.2
Mischung 10: Farbstoffe 1.1, 2.2 und 4.2
Mischung 11: Farbstoffe 1.1, 2.2 und 4.3

In einer bevorzugten Aufführungsform enthalten die Mischungen bezogen auf den gesamten Farbstoffgehalt:
Farbstoff 1: 40 bis 60, insbesondere 30 bis 50 Gew.-%
Farbstoff 2: 40 bis 60, insbesondere 30 bis 50 Gew.-%
Farbstoff 3: 0 bis 60, insbesondere 0 bis 40 Gew.-%
Farbstoff 4: 0 bis 40, insbesondere 0 bis 30 Gew.-%

Zusätzlich können weitere Farbstoffe oder übliche Hilfsmittel eingesetzt werden. Insbesondere enthalten die erfindungsgemäßen Farbstoffmischungen pro 100 Teile Farbstoff 1 bis 50 Teile eines anorganischen Salzes wie beispielsweise Kochsalz oder Natriumsulfat. Die erfindungsgemäßen Mischungen enthalten weiterhin vorzugsweise einen Puffer, insbesondere einen anorganischen Puffer mit einem Pufferungsbereich zwischen pH 6,5 bis 7,5.

Die Farbstoffmischung kann sowohl zum Färben nach dem Ausziehverfahren als auch nach Klotz-Dämpf- und Kaltverweil-Verfahren verwendet werden. Geeignete Materialien sind sowohl reine Cellulosefasermaterialien als auch deren Mischungen mit Polyester wie Polyester/Baumwolle, Polyester/Viskose, Polyester/Leinen sowie Mischungen verschiedener Cellulosefasern wie Baumwolle/Zellwolle bzw. Baumwolle/Leinen. Die Haupteinsatzgebiete der Mischung sind das Färben von Baumwollgarn, Baumwollweb- und -wirkware sowie Frottierware.

Die erfindungsgemäßen Mischungen eignen sich zum Färben nach dem Ausziehverfahren nach folgender Verfahrensweise:

| Zeit (Min) | Temp. (°C) | Maßnahmen |
|---|---|---|
| 10 | 60 | Farbstoffzusatz |
| 40 | 60 | Salzzusatz in Portionen (50 - 80 g/l) |
| 70 | 60 | Alkalizusatz (20 g/l Soda) |
| 90 | 80 - 95 | Aufheizen mit 1°C/Minute |
| 120 | 80 - 95 | Färben |
| 130 | 50 | Warm Spülen |
| 140 | 50 | Ablassen und Auffüllen |
| 150 | 50 | Warm Spülen |
| 160 | 50 | Ablassen und Auffüllen |
| 170 | 80 | Heiß Spülen |
| 180 | 80 | Ablassen und Auffüllen |
| 190 | 80 | Heiß Spülen |
| 200 | 80 | Ablassen und Auffüllen |
| 215 | 95 | Heiß Spülen |
| 220 | 95 | Heiß Ablassen im Überlauf |
| 225 | 80 | Warm Spülen im Überlauf |
| 230 | 20 | Kalt Spülen |
| 240 | 20 | Färbegut entnehmen. |

Die erfindungsgemäßen Mischungen eignen sich auch zum Färben nach Klotzverfahren, vorzugzweise nach folgenden Richtrezepturen:
A) Kaltverweil-Verfahren
Richtrezeptur:
1) 1000 Teile Klotzflotte enthalten
   1 - 80 Teile Farbstoff
   50 - 100 Teile Wasserglas spez. Gew. 1,5
   7,5- 15 Teile Natronlauge spez. Gew. 1,5
   0 - 100 Teile Harnstoff
   0 - 2 Teile Netzmittel
   0 - 20 Teile Verdickungsmittel
2) 1000 Teile Klotzflotte enthalten
   1 - 80 Teile Farbstoff
   8 - 20 Teile Soda
   1 - 12 Teile Natronlauge spez. Gew. 1,5
   0 - 100 Teile Harnstoff
   0 - 2 Teile Netzmittel
   0 - 2 Teile Verdickungsmittel

| | |
|---|---|
| Flottenaufnahme | 50 - 120 % |
| Klotzflottentemperatur | 20 - 30°C |
| Verweilzeit | 24 - 48 Stunden |

B) Einbad-Klotz-Dämpf-Verfahren mit Zwischentrocknen
Richtrezeptur:
1000 Teile Klotzflotte enthalten
1 - 80 Teile Farbstoff
1 - 4 Teile Netzmittel
5 - 20 Teile Verdickungsmittel
5 - 20 Teile Soda wasserfrei
0 - 100 Teile Harnstoff
3 - 5 Teile m-Nitrobenzolsulfonat
Verfahrensbedingungen:

| | |
|---|---|
| Klotzflottentemperatur | 20 - 30°C |
| Flottenaufnahme | 50 - 70 % |
| Trocknungszeit | 1 - 2 Minuten |
| Trocknungstemperatur | 120 - 140°C |
| Dämpftemperatur | 102 - 108°C |
| Dämpfzeit | 1 - 8 Minuten |

C) Einbad-Klotz-Dämpf-Verfahren ohne Zwischentrocknen
Richtrezeptur:
1000 Teile Klotzflotte enthalten
1 - 80 Teile Farbstoff
1 - 4 Teile Netzmittel
10 - 20 Teile Natriumbicarbonat
oder
10 - 20 Teile Natriumbicarbonat/Soda 50/50
3 - 5 Teile m-Nitrobenzolsulfonat
Verfahrensbedingungen:

| | |
|---|---|
| Klotzflottentemperatur | 20 - 30°C |
| Flottenaufnahme | 50 - 70 % |
| Dämpftemperatur | 102 - 108°C |
| Dämpfzeit | 1 - 8 Minuten |

D) Zweibad-Klotz-Dämpf-Verfahren mit Zwischentrocknen
Richtrezeptur:
1000 Teile Klotzflotte enthalten
1 - 80 Teile Farbstoff
1 - 4 Teile Netzmittel
5 - 20 Teile Verdickungsmittel
Chemikalienklotzflotte:
1000 Teile Chemikalienklotzflotte enthalten 250 Teile Kochsalz
20 - 40 Teile Soda wasserfrei
und/oder
20 Teile Natronlauge des spez. Gew. 1,5
Verfahrensbedingungen:

| | |
|---|---|
| Klotzflottentemperatur | 20 - 30°C |
| Flottenaufnahme | 50 - 70 % |
| Trocknungszeit | 1 - 2 Minuten |
| Trocknungstemperatur | 120 -140°C |
| Flottenaufnahme im Chemikalienklotz | 30 - 40 % |
| Dämpfzeit | 1 - 8 Minuten |
| Dämpftemperatur | 102 -108°C |

E) Zweibad-Klotz-Dämpf-Verfahren ohne Zwischentrocknung
Richtrezeptur:
1000 Teile Klotzflotte enthalten
1 - 80 Teile Farbstoff
1 - 40 Teile Netzmittel
Chemikalienklotzflotte:
1000 Teile Chemikalienklotzflotte enthalten
250 Teile Kochsalz
20 - 40 Teile Soda wasserfrei
und/oder 20 Teile Natronlauge des spez. Gew. 1,5
Verfahrensbedingungen:

| | |
|---|---|
| Klotzflottentemperatur | 20 - 30°C |
| Flottenaufnahme | 50 - 70 % |
| Flottenaufnahme im Chemikalienklotz | 20 - 50 % |
| Dämpfzeit | 1 - 8 Minuten |
| Dämpftemperatur | 102 -108°C |

F) Klotz-Kondensier-Verfahren
Richtrezeptur:
1000 Teile Klotzflotte enthalten
1 - 40 Teile Farbstoff
1 - 4 Teile Netzmittel
5 - 10 Teile Soda
und/oder
5 - 10 Teile Natriumbicarbonat
5 - 20 Teile Verdickungsmittel
3 - 5 Teile m-Nitrobenzolsulfonat
Verfahrensbedingungen:

| | |
|---|---|
| Klotzflottentemperatur | 20 - 30°C |
| Flottenaufnahme | 50 - 70 % |
| Trocknungstemperatur | 120 -140°C |
| Trocknungszeit | 1 Minute |
| Kondensiertemperatur | 140 - 160°C |
| Kondensierzeit | 1 Minute |

### Beispiel 1

1000 Teile einer wässrigen Färbeflotte werden auf einer Haspelkufe bei 60°C mit 100 Teilen einer gebleichten Baumwollwirkware und 3 Teilen einer Reaktivfarbstoffmischung versetzt. Die Mischung besteht aus 50 Teilen des Farbstoffs 1.1 (λₘₐₓ = 621 nm) und 50 Teilen des Farbstoffs 2.1 (λₘₐₓ = 656 nm).

Nachdem sich in einer Zeit von 15 Minuten die Farbstoffmischung gleichmäßig in der Flotte und auf der Baumwolle verteilt hat, werden über einen Zeitraum von 30 Minuten 50 Teile Natriumchlorid in die Färbeflotte gegeben und anschließend 20 Teile Soda im Abstand von 10 Minuten zu je 3 Portionen von je 1 Teil, 2 Teilen und 7 Teilen hinzugefügt. Anschließend wird in 30 Minuten auf 80°C erwärmt und 30 Minuten bei dieser Temperatur behandelt. Danach wird die Flotte abgelassen, zweimal bei 60°C und zweimal bei 80°C gespült. Anschließend wird 15 Minuten kochend extrahiert und die Waschflotte abgelassen. Nach dem kalt Spülen erhält man eine klare Türkisgrünfärbung mit guten Echtheitseigenschaften.

Die erhaltene Färbung ist egaler als eine nach gleichem Färbschema erhaltenen Färbung, in der jeweils 3 Teile ausschließlich des Farbstoffs 1.1 bzw. Farbstoff 2.1 eingesetzt wurden.

### Beispiel 2

800 Teile einer wäßrigen Färbeflotte werden auf einem handelsüblichen Jetfärbeaggregat bei 30°C mit 100 Teilen Baumwollwirkware und 40 Teilen Natriumsulfat versetzt.

Danach wird 15 Minuten auf 60°C erwärmt und über einen Zeitraum von 30 Minuten 100 Teile einer Farbstofflösung zugesetzt bestehend aus
3 Teile einer Mischung aus
40 Teile des Farbstoffs 1.1 sowie
60 Teile des Farbstoffs 2.1.

Anschließend wird über einen Zeitraum von 30 Minuten 20 Teile Soda wasserfrei gelöst in 100 Teilen Wasser zugegeben. Nach 15 Minuten wird in 30 Minuten auf 90°C erwärmt und 15 Minuten bei dieser Temperatur behandelt.

Danach wird die Flotte abgelassen, zweimal bei 60°C und zweimal bei 80°C gespült. Anschließend wird 15 Minuten kochend geseift und die Waschflotte abgelassen. Nach dem kalt Spülen erhält man eine klare Türkisgrünfärbung mit verbesserter Egalität.

### Beispiel 3

100 Teile einer gebleichten Baumwollmaschenware werden auf einem handelsüblichen Jetfärbeaggregat mit 800 Teilen einer 60°C warmen Färbeflotte behandelt, welche
40 Teile Natriumchlorid
20 Teile Soda (wasserfrei)
4 Teile der Farbstoffmischung bestehend aus
50 Teilen des Farbstoffs 1.1 (λₘₐₓ = 621 nm)
25 Teilen des Farbstoffs 2.1 (λₘₐₓ = 656 nm) und
25 Teilen des Farbstoffs 2.2 (λₘₐₓ = 657 nm)
enthält.

Das Bad wird in 20 Minuten auf 80°C erwärmt und 60 Minuten bei dieser Temperatur gehalten. Nach dieser Zeit wird die Flotte abgelassen und zweimal je 10 Minuten mit 800 Teilen einer 60°C warmen Flotte und zweimal mit 800 Teilen einer 80°C warmen Flotte gespült.

Anschließend wird mit frischer Flotte auf 95°C erwärmt und 20 Minuten kochend extrahiert. Nach Ablassen der Waschflotte wird kalt gespült.

Man erhält eine klare Türkisgrünfärbung mit verbesserter Egalität.

### Beispiel 4

100 Teile eines gebleichten Baumwollgarnes werden auf einem handelsüblichen Garnfärbeapparat bei einer Flottenumwälzung von 271 kg/Minute mit 750 Teilen einer 60°C warmen Färbeflotte behandelt, welche
40 Teile Natriumsulfat (wasserfrei)
10 Teile Soda (wasserfrei)
5 Teile einer Farbstoffmischung bestehend aus
30 Teilen des Farbstoffs 1.1
30 Teilen des Farbstoffs 2.1
sowie
40 Teilen des Farbstoffs 3.2
enthält.

Das Bad wird in 20 Minuten auf 80°C erwärmt und 60 Minuten bei dieser Temperatur gehalten. Nach dieser Zeit wird die Flotte abgelassen und zweimal mit 750 Teilen einer 60°C warmen Flotte gespült. Danach wird mit 750 Teilen einer 60°C warmen frischen Flotte aufgefüllt und 0,5 Teile einer 60%igen Essigsäure zugesetzt und auf 80°C erwärmt. Nach 10 Minuten Behandeln bei dieser Temperatur wird die Flotte abgelassen, zweimal bei 50°C und Zweimal bei 80°C gespült. Anschließend wird 15 Minuten kochend geseift und kalt gespült.

Man erhält eine klare Türkisgrünfärbung.

### Beispiel 5

100 Teile einer entschlichteten und gebleichten Baumwollwebware werden mit einer Flottenaufnahme von 65 % mit einer wässrigen Farbflotte imprägniert, welche in 1000 Teilen
40 Teile einer Mischung bestehend aus
50 Teilen des Farbstoffs 1.1
50 Teilen des Farbstoffs 2.1
50 Teile Wasserglas vom spez. Gew. 1,5
sowie
7,5 Teile Natronlauge vom spez. Gew. 1,5
gelöst enthält.

Die Temperatur der Flotte beträgt 25°C. Die mit Farbflotte imprägnierte Gewebebahn wird aufgedockt, in Polyethylenfolie eingepackt und bei langsamer Rotation 24 Stunden verweilt. Anschließend wird auf einer achtkästigen Kontinuebreitwaschmaschine nach folgendem Schema ausgewaschen. Zweimal kalt spülen, zweimal warm spülen, zweimal kochend extrahieren, warm spülen, kalt spülen.

Man erhält eine egale klare Türkisgrünfärbung mit guten Echtheitseigenschaften.

### Beispiel 6

100 Teile einer gebleichten Baumwollwebware werden auf einem handelsüblichen Kurzflottenjetfärbeaggregat mit 500 Teilen einer 60°C warmen Färbeflotte behandelt, welche
30 Teile Natriumsulfat (wasserfrei)
10 Teile Soda (wasserfrei)
2 Teile der Farbstoffmischung bestehend aus
50 Teilen des Farbstoffs 1.1
50 Teilen des Farbstoffs 2.1
sowie
0,5 Teile des Farbstoffs 4.1 (λₘₐₓ = 609 nm) der Formel 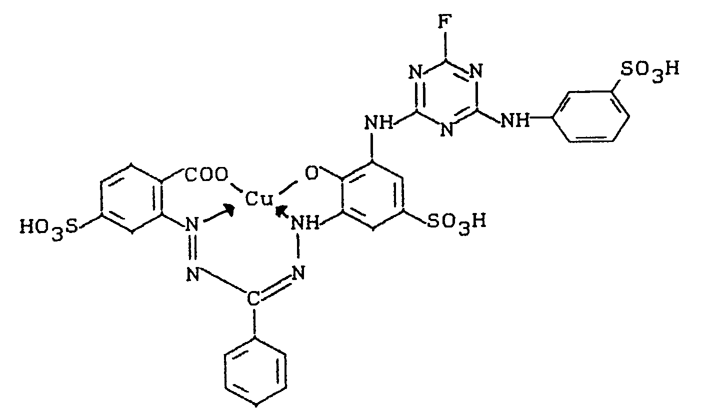
Das Bad wird in 20 Minuten auf 80°C erwärmt und 60 Minuten bei dieser Temperatur gehalten. Nach dieser Zeit wird die Flotte abgelassen und zweimal mit 800 Teilen einer 60°C warmen Flotte gespült.

Anschließend wird mit frischer Flotte auf 95°C erwärmt und 20 Minuten kochend extrahiert. Nach Ablassen der Waschflotte wird kalt gespült.

Man erhält eine egale Türkisgrünfärbung mit guten Echtheitseigenschaften.

## Patentansprüche

1. Farbstoffmischung aus wenigstens zwei Reaktivfarbstoffen, welche eine unterschiedliche Reaktivgruppe aufweisen, dadurch gekennzeichnet, daß wenigstens ein Vinylsulfonyl-Ni-phthalocyaninfarbstoff 1.1, 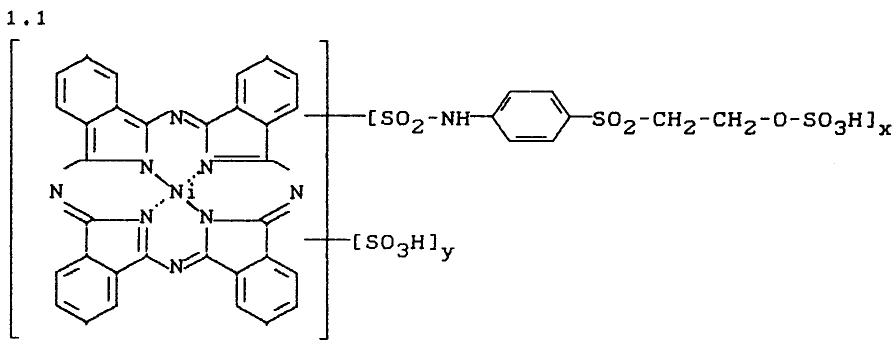 wobei
x = 1 bis 3, insbesondere 1 bis 2, speziell 1,3 bis 1,8
y = 1 bis 3, insbesondere 1,5 bis 2
x + y = etwa 3 bis 4
sowie wenigstens ein Fluor-chlor-Ni-pyrimidinylphthalocyaninfarbstoff 2 der Formeln 2.1 oder 2.2 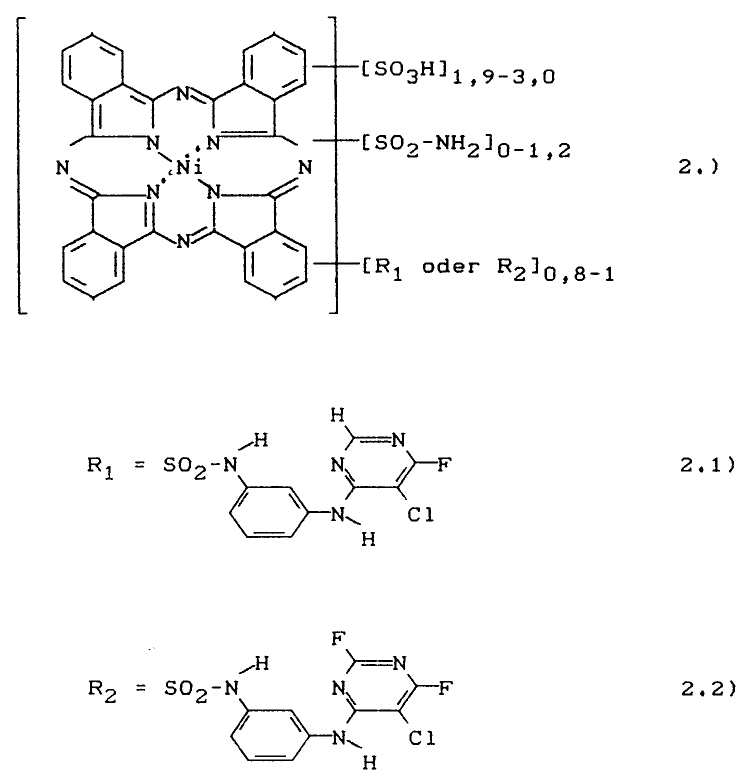 und/oder wenigstens ein Chlortriazinyl-Ni-phthalocyanin-Farbstoff 3 der Formel 3.1 oder 3.2 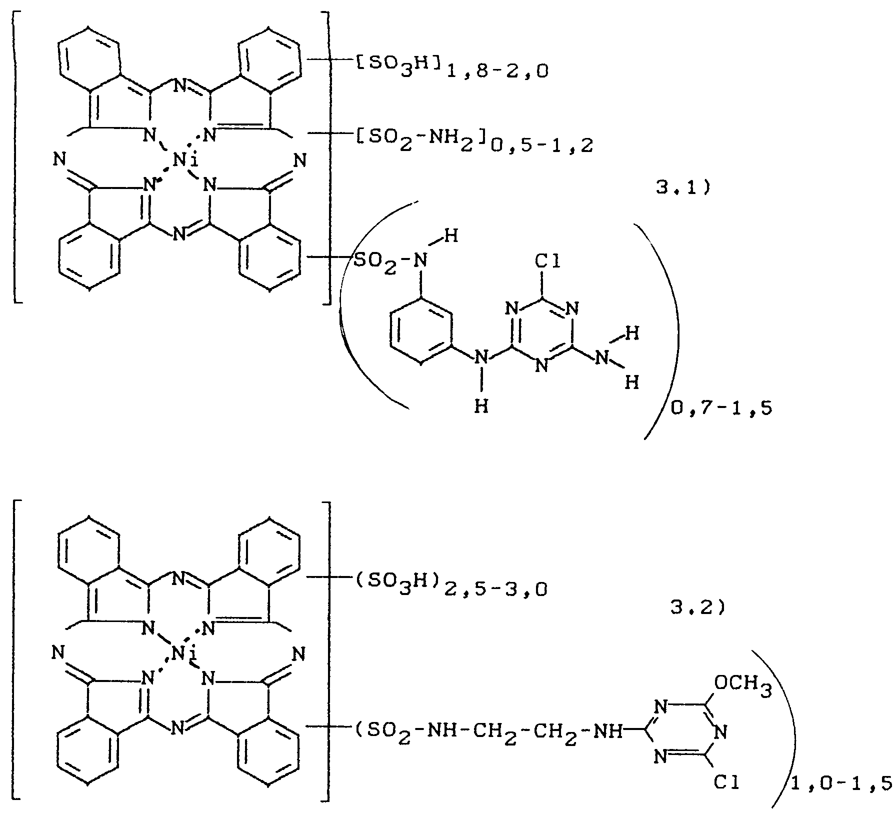 enthalten ist.

2. Mischung nach Anspruch 1, dadurch gekennzeichnet, daß zusätzlich wenigstens ein Farbstoff 4 der Formeln 4.1 bis 4.3 enthalten ist 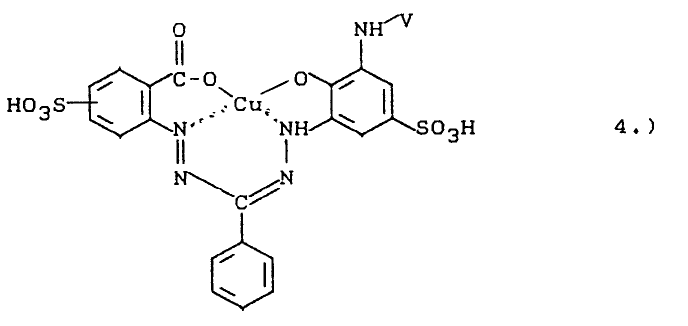 wobei bedeuten 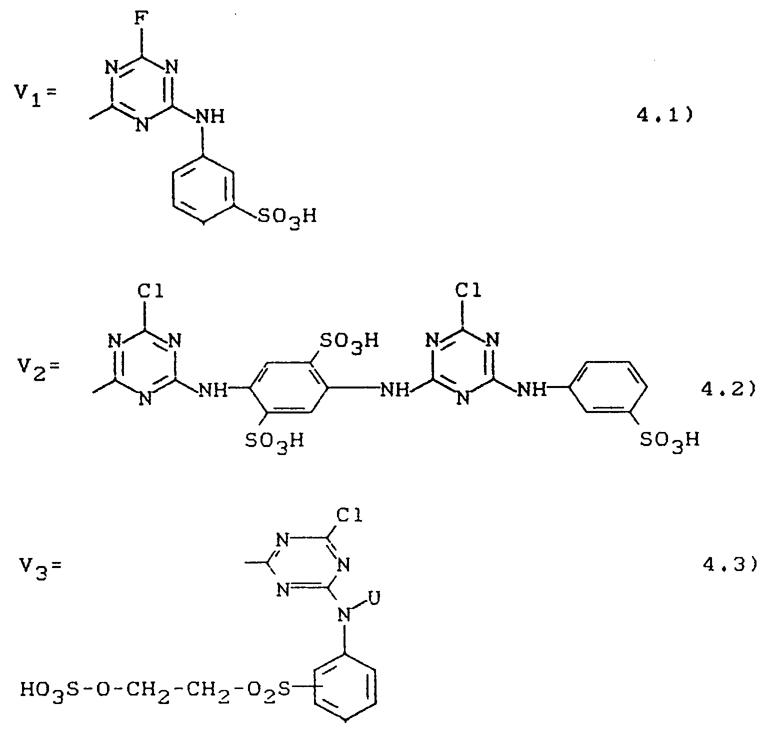 mit U = H, CH₃ oder -C₂H₅

3. Mischung nach wenigstens einem der vorhergehenden Ansprüche, dadurch gekennzeichnet, daß, bezogen auf die Summe der Farbstoffe, enthalten sind:
Farbstoff 1: Gew.-% 40 bis 60, bevorzugt 30 bis 50
Farbstoff 2: Gew.-% 40 bis 60, bevorzugt 30 bis 50
Farbstoff 3: Gew.-% 0 bis 60, bevorzugt 0 bis 40
Farbstoff 4: Gew.-% 0 bis 40, bevorzugt 0 bis 30

4. Mischungen nach wenigstens einem der vorhergehenden Ansprüche, dadurch gekennzeichnet, daß die Farbstoffmischung auf 100 Teile Farbstoff 1 bis 50 Teile eines anorganischen Salzes enthält.

5. Mischungen nach wenigstens einem der vorhergehenden Ansprüche, dadurch gekennzeichnet, daß pro 100 Teile der Farbstoffe 1 bis 5 Teile eines anorganischen Puffers, 0,5 bis 10 Teile eines Dispergiermittels und 0,5 bis 5 Teile eines Entstaubungsmittels enthalten sind und die Mischung einen pH-Wert von 6,5 bis 7,5 aufweist.

6. Verfahren zum Färben von Cellulosefasern oder Cellulose enthaltenden Fasermischungen, dadurch gekennzeichnet, daß eine Reaktivfarbstoffmischung gemäß wenigstens einem der vorhergehenden Ansprüche verwendet wird.

7. Textilien, die Fasern enthalten, welche mit einer Reaktivfarbstoffmischung gemäß wenigstens einem der vorhergehenden Ansprüche gefärbt worden sind.
